(19) **Europäisches Patentamt / European Patent Office / Office européen des brevets**

(11) **EP 4 177 798 A1**

(12) # EUROPEAN PATENT APPLICATION

(43) Date of publication:
**10.05.2023 Bulletin 2023/19**

(21) Application number: **22204943.9**

(22) Date of filing: **01.11.2022**

(51) International Patent Classification (IPC):
**G06N 3/084** (2023.01)    **G06N 3/09** (2023.01)
**G06N 3/096** (2023.01)    **G06N 3/098** (2023.01)
**G06N 3/045** (2023.01)

(52) Cooperative Patent Classification (CPC):
**G06N 3/084; G06N 3/045; G06N 3/09; G06N 3/096; G06N 3/098**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.11.2021 CN 202111320238**
**19.10.2022 US 202218047783**

(71) Applicant: **Alibaba Cloud Computing (Beijing) Co., Ltd.**
**Beijing 100088 (CN)**

(72) Inventors:
- **MEN, Rui**
  **Beijing (CN)**
- **ZHOU, Chang**
  **Beijing (CN)**
- **YANG, Hongxia**
  **Beijing (CN)**
- **ZHOU, Jingren**
  **Hangzhou, Zhejiang (CN)**
- **LIN, Junyang**
  **Beijing (CN)**
- **YANG, An**
  **Beijing (CN)**

(74) Representative: **Finnegan Europe LLP**
**1 London Bridge**
**London SE1 9BG (GB)**

(54) **METHOD AND APPARATUS FOR TRAINING A MODEL**

(57) A computer-implemented method, server, and apparatus for model training are provided. The method for model training includes: training a first model to obtain a parameter set of the trained first model, in which first layers in the first model share the same weight parameters; copying the parameter set for multiple times as weight parameters of second layers of a second model; and training the second model to realize model convergence. The first model and the second model have the same computation graph, and the number of the second layers is equal to or greater than the number of the first layers.

FIG. 1

Server 200

EP 4 177 798 A1

**Description**

## TECHNICAL FIELD

The present disclosure relates to the field of natural language processing, and specifically, to a method and an apparatus for training a model.

## BACKGROUND

In recent years, pre-training becomes a focus of attention in fields such as natural language processing and cross-modality representation learning. However, as the parameter scale and the model capability increase, more and more attention has been made to exploring how to use finite resources to implement efficient and ultra-large-scale pre-training. Because when pre-training is expanded to an ultra large scale with hundred billion and more parameters, a requirement for hardware resources, especially a requirement for model acceleration units may be greatly increased. However, in an actual project, on one hand, considering that although pre-training may be performed on several servers through a parallel strategy, it is quite complex for implementing code thereof. Therefore, pre-training is generally performed by using one server, namely, all model acceleration units required for pre-training are integrated into one server. However, a number of model acceleration units that can be integrated into one server generally has an upper limit, and when the upper limit is reached, a training objective can be only realized by increasing the training time.

## SUMMARY

The claimed invention is defined by the appended independent claims.

Embodiments of the present disclosure provide a method for model training. The method can include: training a first model to obtain a parameter set of the trained first model, wherein a plurality of first layers in the first model share same weight parameters; copying the parameter set for a plurality of times as weight parameters of a plurality of second layers of a second model; and training the second model to realize model convergence. The first model and the second model have a same computation graph, and the number of the plurality of second layers is equal to or greater than the number of the plurality of first layers.

Embodiments of the present disclosure provide an apparatus for model training. The apparatus can include: a first training unit configured to train a first model to obtain a parameter set of the trained first model, wherein a plurality of first layers in the first model share same weight parameters; a parameter copying unit configured to copy the parameter set for a plurality of times as weight parameters of a plurality of second layers of a second model; and a second training unit configured to train the second model to realize model convergence. The first model and the second model have a same computation graph, and the number of the plurality of second layers is equal to or greater than the number of the plurality of first layers.

Embodiments of the present disclosure provide a server. The server can include: a memory storing a set of computer instructions, one or more processors, and a plurality of model acceleration units. The one or more processors and the plurality of model acceleration units are configured to execute the set of instructions to cause the server to perform: training a first model to obtain a parameter set of the trained first model, wherein a plurality of first layers in the first model share same weight parameters; copying the parameter set for a plurality of times as weight parameters of a plurality of second layers of a second model; and training the second model to realize model convergence. The first model and the second model have a same computation graph, and the number of the plurality of second layers is equal to or greater than the number of the plurality of first layers.

Embodiments of the present disclosure provide a non-transitory computer-readable medium. The non-transitory computer-readable medium stores a set of instructions that is executable by at least one processor of an electronic device to cause the electronic device to perform a method for model training that can include: training a first model to obtain a parameter set of the trained first model, wherein a plurality of first layers in the first model share same weight parameters; copying the parameter set for a plurality of times as weight parameters of a plurality of second layers of a second model; and training the second model to realize model convergence. The first model and the second model have a same computation graph, and the number of the plurality of second layers is equal to or greater than the number of the plurality of first layers.

## BRIEF DESCRIPTION OF THE DRAWINGS

The foregoing and other objectives, features, and advantages of the present disclosure becomes clearer through the descriptions of the embodiments of the present disclosure with reference to the following accompanying drawings. In the accompanying drawings:

**FIG. 1** is a schematic diagram of deployment of an example application service according to some embodiments of the present disclosure;

**FIG. 2** is a schematic diagram of an example server for training according to some embodiments of the present disclosure;

**FIG. 3** is a schematic diagram of an example network structure of an exemplary model;

**FIG. 4** is a flowchart of an example method for training a model for a specific network structure according to some embodiments of the present disclosure; and

**FIG. 5** is a schematic diagram of an example apparatus for training a model for a specific network structure according to some embodiments of the present disclosure.

## DETAILED DESCRIPTION

The following describes the present disclosure based on various embodiments, but the present disclosure is not merely limited to these embodiments. Some specified details are described in the following detailed descriptions of the present disclosure. A person skilled in the art would also fully understand the present disclosure without the descriptions of the details. To avoid confusion regarding the essence of the present disclosure, well-known methods, procedures, and processes may not be described in detail. In addition, the accompanying drawings are not necessarily drawn to scale.

In view of the above problems to be solved, embodiments of the present disclosure provide a technical solution (referred to as Mixture-of-Experts, MOE) that can complete ultra-large-scale model training or pre-training with fewer resources and relatively more efficient when compared with conventional technologies. In general, at least one of a training time or a number of model acceleration units integrated into a server may be reduced in the method provided in some embodiments when compared with conventional technologies.

The present disclosure plans to divide ultra-large-scale training (including pre-training) into two stages for execution. In the first stage, a model only uses a small number of weight parameters (referred to as weights, weight coefficients, or weight parameters in some articles) to perform efficient training to realize model convergence. In the second stage, training is continuously performed according to the model obtained through the first stage, so the model may converge at a relatively low loss level, thereby greatly reducing training steps required for a large model to converge. In this condition, training of the second stage may adopt a CPU offload mode. The CPU offload mode refers to a method of offloading data and calculation from a dedicated processing unit (for example, a GPU) to a central processing unit (e.g., storing parameters that are not used in each forward operation in a CPU internal memory, and reading the parameters from the CPU internal memory each time a dedicated processor needs to use the parameters) to reduce internal memory occupation to the dedicated processing unit during neural network training. Therefore, internal memory occupation to the dedicated processing unit during training is greatly reduced. By the space-time trade off, ultra-large-scale pre-training can thereby be implemented with fewer resources.

As used herein, a neural network generally refers to an artificial neural network (ANN), which is an algorithm network simulating animal neural network action features to perform distributed parallel information processing. A classic neural network, which is also the simplest neural network structure, includes three layers: an input layer, an output layer, and an intermediate layer (also referred to as a hidden layer). The input layer, the output layer, and the intermediate layer may respectively include a plurality of nodes. A node is a minimum processing unit in a neural network. A very complex neural network structure can be formed through wide mutual connection among a large number of nodes with simple functions.

In a neural network, mathematization is performed on each node to generate a mathematical model of each node, and mathematical models of the large number of nodes in the neural network form a neural network model.

Regarding the pre-training, it is well-known that model training generally requires a large amount of resources, including but not limited to a large amount of training samples that need to be labeled and computer resources for performing training, so that model training is not easy to perform. A "work-in-progress" model with an exemplary weight parameter may be provided through pre-training, which is generally referred to as a pre-trained model. Before the pre-trained model is applicable to a real scene, incremental training may be further performed on the pre-trained model by using sample data acquired in the real scene, to finely adjust the weight parameter in the pre-trained model through the incremental training, so as to obtain a "completed" model applicable to the real scene, which is generally referred to as a trained model. However, when the pre-training is expanded to an ultra large scale with more than hundred billion parameters, both computing resources and an extremely long time required for the pre-training become challenges.

The dedicated processing unit (for example, a GPU) used for training is generally expensive, so that costs for model training can be reduced through this two-stage training method. In addition, due to a result of the first stage, training of the second stage does not need to consume a large amount of training time, thereby achieving a balance between training costs and the training time in general. For convenience, in the following contents the term "training" is consistently used to represent training or pre-training. The embodiments of the present disclosure are described below in detail.

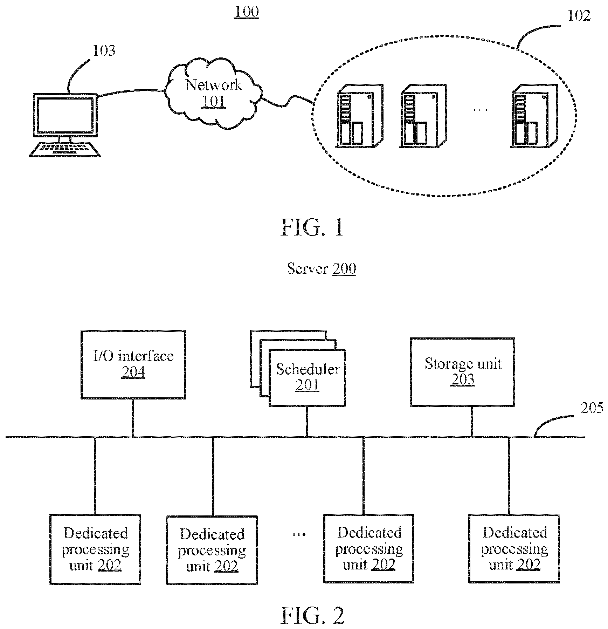

FIG. 1 is a schematic diagram of deployment of an application service according to some embodiments. As shown in the figure, the deployment diagram includes a terminal 103 and a server cluster 102 connected through a network 101.

The network 101 is based on one of various communication technologies or a combination of a plurality of communication technologies implemented by using switching signals, including but not limited to, a wired technology using an electrical or optical conductive cable, and a wireless technology using infrared, radio frequency, or a wireless technology in another form. In different application scenarios, the network 101 may be the Internet, a wide area network, or a local area network, and may be a wired network or a wireless network. For example, the network 101 may be a local area network in a company.

The server cluster 102 includes a plurality of physical servers. The terminal 103 may be an electronic device such as a smartphone, a tablet computer, a notebook computer, or a desktop computer. Various application systems are deployed on the server cluster 102, and the terminal 103 may obtain services provided by the application systems through the network 101.

With the development of cloud computing, a cloud service system may be deployed on the server cluster 102. The cloud service system can gather software and hardware resources in the cloud server cluster and provide software and hardware services according to a request from the terminal 103. For example, the cloud service system may provide a computer (which may be a virtual machine) with specified configurations to a user, where the specified configurations include, for example, a processor type, a memory size, a hard disk size, an operating system type, and types of software (e.g., text processing software and video player software) deployed on an operating system, etc. The user remotely accesses and uses the computer through the terminal 103 to complete various works, such as using the computer as a development server to perform a code development work. In another example, the cloud service system provides a storage space with a specified size based on a user request, so that the user may store electronic data in the storage space. By using the cloud service system, a developer further applies for a training server, so that the developer may implement ultra-large-scale model training based on various embodiments of the present disclosure.

FIG. 2 is a schematic diagram of a server for training according to some embodiments of the present disclosure. As shown in the figure, a server 200, as a dedicated electronic device for executing model training or model execution, may include, but not limited to, a scheduler 201, a storage unit 203, an I/O interface 204, and a plurality of dedicated processing units 202, which are coupled through a bus 205.

The storage unit 203 may include a readable medium in the form of a volatile storage unit, for example, a random-access memory (RAM) or a cache storage unit. The storage unit 203 may further include a readable medium in the form of a non-volatile storage unit, for example, a read-only memory (ROM), a flash memory, and various magnetic memories.

The storage unit 203 may store various program modules and data, where the various program modules include operating systems and application programs providing functions such as text processing, video playing, and software editing and compilation, etc. Executable codes of the application programs can be read by the scheduler 201 from the storage unit 203 and executed, to implement functions that the program modules are predetermined to provide. The scheduler 201 is generally a central processing unit (CPU).

The bus 205 may indicate one or more of several types of bus structures, including a storage unit bus or storage unit controller, a peripheral bus, an accelerated graphics port, a processing unit, or a local bus using any of a plurality of bus structures.

The server 200 may communicate with one or more external devices (e.g., a keyboard, a pointing device, and a Bluetooth device, etc.), and may also communicate with one or more devices that enable a user to interact with the server 200, or communicate with any device (e.g., a router or a modem) that enables the server 200 to communicate with one or more other computing devices. Such communication may be performed by using the input/output (I/O) interface 204. In addition, the server 200 may further communicate with one or more networks (e.g., a local area network (LAN), a wide area network (WAN), or a public network such as the Internet) through a network adapter (not shown in the figure). For example, the terminal 103 in FIG. 1 may access the server 200 through the network adapter. It should be understood that although not shown in the figure, other hardware or software modules may be used based on the server 200, including, but not limited to microcode, a device drive, a redundant processing unit, an external disk drive array, a RAID system, a tape drive, or a data backup and storage system.

In the present disclosure, the various program modules and data stored in the storage unit include an initial model, code for implementing training, training samples, a model in an intermediate state, and a final model. The initial model (a neural network framework with its weight parameter being in an initial state), the model in the intermediate state, and the final model are obtained through training, and because training does not change the network structure of a model, the initial model, the model in the intermediate state, and the final model have the same network structure. A training process starts from the initial model, and the weight parameter is continuously corrected to generate the model in the intermediate state and obtain the final model. Functions involved in training include the model deployment, the gradient error calculation, and the weight parameter correction, etc. A model may exist in the form of a static file or a dynamic code file. Model development may be implemented by using software for model integration development. At present, scientists in the neural network field have developed a plurality of software platforms for model integration development with integrated functions such as editing, compilation, and deployment, and each integrated development software platform is at least dedicated to integrated development of a specific model, so that training to be performed in the present disclosure may also be implemented based on an adapted integrated development software platform.

In the present disclosure, the training samples are not limited to multi-modality or single-modality. For example, each piece of visual information, text information, and audio information is referred to as one modality. Correspondingly, multi-modality refers to two or more modalities are included in a sample, and single-modality refers to only one modality is included in a sample. The training samples may be strongly supervised data, or may be weakly supervised data or unsupervised data.

As shown in the figure, the server 200 includes a plurality of dedicated processing units 202. For example, the dedicated processing unit 202 is a model acceleration unit. Model acceleration units include various hardware execution units produced by different companies and dedicated to specific neural network models such as neural-network processing units (NPUs) and tensor processing units (TPUs). In a conventional processor architecture design, logic control is very efficient, but efficiency is not enough in terms of large-scale parallel calculation, so that the design is not efficient for model calculation. Therefore, a model acceleration unit is developed, and for example, the model acceleration unit is a neural processing unit (NPU). The NPU is a processing unit using a data driven parallel calculation architecture and configured to process a large number of operations (for example, convolution and pooling) of various neural network nodes. In another example, the dedicated processing unit 202 is a graphics processing unit (GPU). In another example, the dedicated processing unit 202 is a GPU. The GPU is a microprocessor dedicated to image and graphics related operation works. Because the GPU uses a large number of computing units dedicated to graphics processing, GPU reduces the graphics card's reliance on a CPU, and undertakes some computing-intensive graphics and image processing works that are originally undertaken by the CPU, so that the processing efficiency for image data is greatly improved.

The plurality of dedicated processing units 202 are controlled by the scheduler 201. The scheduler 201 deploys model code and transmits code that needs to be executed in the plurality of dedicated processing units 202 to the plurality of dedicated processing units 202. When executing the code, the plurality of dedicated processing units 202 obtain training samples from specified locations in the storage unit 203.

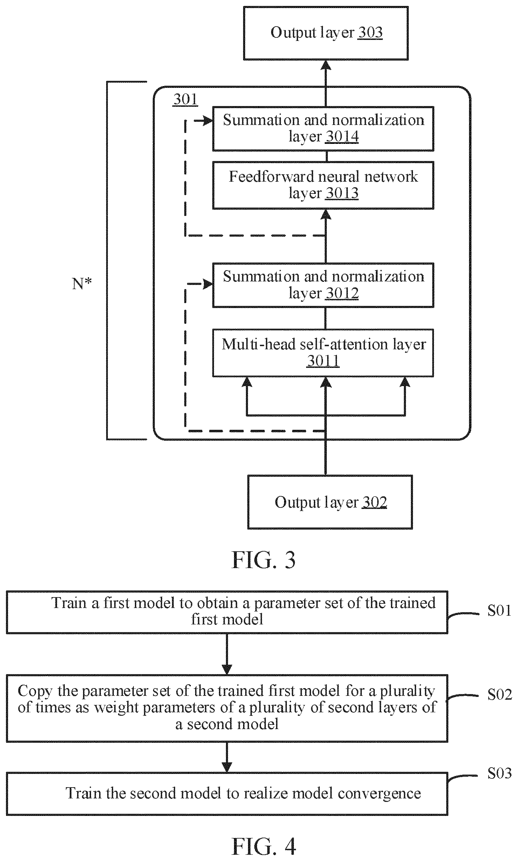

FIG. 3 is a schematic diagram of a network structure of an exemplary model according to some embodiments. All models mentioned in the embodiments of the present disclosure may include the network structure shown in FIG. 3.

Referring to the figure, the model is a Bidirectional Encoder Representations from Transformers (BERT) model and includes an input layer 302 and N stacked intermediate layers 301. The intermediate layers have the same topology structure, namely, the intermediate layers include same processing units and connection relationships of the processing units are the same. The processing units are shown in the figure, which include a multi-head self-attention mechanism layer 3011, a summation and normalization layer 3012, a feedforward neural network layer 3013, and a summation and normalization layer 3014. A connection relationship between each processing unit is shown through a dashed line or solid line between two processing units.

Further, each intermediate layer may be represented as: LayerNorm(x+Sublayer(x)), where Sublayer(x) is a function implemented by the self-attention layer 3011 and the fully connected feedforward network 3013 respectively. Functions implemented by the self-attention layer 3011 are as follows:

$$X * w^Q = \mathrm{Q} \quad (1)$$

$$X * w^K = \mathrm{K} \quad (2)$$

$$X * w^V = \mathrm{V} \quad (3)$$

X represents an input matrix, weight matrices $w^Q$, $w^K$, and $w^V$ represent weight parameters, and Q, K, V represent a query matrix, a key matrix, and a value matrix.

An output is then obtained through formula (4), and the output is provided to the summation and normalization layer 3012.

$$\mathrm{Attention}\,(\mathrm{Q, K, V}) = \mathrm{softmax}(\frac{QK^T}{\sqrt{d_k}}) * \mathrm{V} \quad (4)$$

where $\sqrt{d_k}$ represents a square root of a dimension of a key vector, and T represents transpose of a matrix.

The fully connected feedforward network 3013 includes two linear transformations, and then uses a function ReLU as an activation function.

$$FFN(X)= Relu(XW_1+b_1) W_2 +b_2 \ (5)$$

where X is an output matrix, $W_1$ and $W_2$ are weight parameters, and $b_1$ and $b_2$ are bias parameters.

Correspondingly, the intermediate layers having the same topology structure refers to that functions corresponding to the intermediate layers are the same. Model training is to obtain weight parameters with exemplary values used by the functions of the layers. During model training, a result of the model is calculated through a forward propagation algorithm, an error is then calculated according to an expected result and the result, and the weight parameters are calculated and corrected layer-by-layer based on the error and a back propagation algorithm. The functions of the layers in the initial model may uniformly use an initial weight parameter, but the weight parameters of the layers differ when the weight parameters in the layers are calculated and corrected layer-by-layer.

According to embodiments of the present disclosure, a method for training a model is provided. A first model for the method for training the model includes a plurality of layers, the plurality of layers have the same topology structure (for example, the plurality of layers 301 in FIG. 3). FIG. 4 is a flowchart of the method for training a model. The method includes steps S01, S02, and S03.

In step S01, a first model is trained to obtain a parameter set of the trained first model.

In step S02, the parameter set of the trained first model is copied for a plurality of times as weight parameters of a plurality of second layers of a second model.

In step S03, the second model is trained to realize model convergence.

In some embodiments, step S01 is training for the first model. N1 layers included in the first model are designated to share weight parameters, so that the parameter set obtained after training is actually a weight parameter of one layer. However, the layers in the first model share the weight parameters, so that the weight parameters of other layers also point to the parameter set. Step S02 is used for copying the parameter set obtained through training for N2 times as weight parameters of N2 layers included in the second model. Step S03 is to perform model training on the second model after step S02, the N2 layers included in the second model respectively have independent parameter sets, and a training process is to continuously adjust the parameter sets of the N2 layers to converge the model. The first model and the second model may have the same computation graph, and the N1 and N2 layers may have the same topology structure. For example, the N1 and N2 layers are the layer 301 shown in FIG. 3. N1 and N2 are greater than or equal to 2, and N2 is greater than or equal to N1.

For a computation graph, a current deep learning framework mainly includes two programming manners: declarative programming and imperative programming. For the declarative programming, program code first defines a neural network model structure for describing calculation logic, but the neural network model structure is not executed immediately, and the neural network model structure is executed only when the program code of the network model structure is invoked for execution. The neural network model structure includes a plurality of operators (or symbolic expressions of the operators) and a connection relationship thereof, which may be shown in a patterning manner, so that the neural network model structure is referred to as a static computation graph. For the imperative programming, the program code directly returns an operation result, and definition and execution of the neural network model structure are synchronous. Generally, a static diagram is convenient for performing compilation and optimization on a neural network model in general, which is more conducive to performance improvement; and a dynamic diagram is very convenient for a user to test a specific program.

The method for training a model provided in some embodiments may include twice training. The first training causes the layers to share weight parameters to greatly reduce weight parameters that need to be trained, and exemplary weight parameters obtained through the first training are then copied to a model whose layers do not share weight parameters to perform a second training, so as to obtain the final model. Descriptions are provided by using an example. In the 12-layer network structure described above, each layer includes 1 trillion weight parameters. By designating the 12 layers to share weight parameters, step S01 is to obtain the 1 trillion weight parameters through model training. Step S02 is to expand the 1 trillion exemplary weight parameters obtained through step S01 to 12 trillion weight parameters through copying. And step S03 is to train a model including the 12 trillion weight parameters to obtain the final model. It may be understood that step S01 may use a server integrating dedicated processing units fewer than that of an existing solution to perform training, and S03 may also use a server integrating dedicated processing units fewer than that of the existing solution. Step S03 performs training based on exemplary weight parameter sets, so that the server may perform training in a CPU offload mode, to obtain a training result by consuming space to save time. Alternatively, if the numbers of dedicated processing units integrated in the servers of step S01 and step S03 are the same as that of the existing solution, a training time of step S01 and step S03 may be greatly reduced.

Therefore, in general, at least one of a training time or a number of model acceleration units integrated into a server may be reduced in the method provided in some embodiments when compared with conventional technologies.

In addition, model training generally includes two processes: a forward process and a backward process. The forward process is to output a result according to training samples, and the backward process is gradient accumulation or error back propagation, namely, a weight parameter in each layer is calculated and corrected according to an error (or gradient accumulation) between a result and an expected result of each layer in a reverse direction. In terms of gradient calculation, an accumulate n operator rather than an add n operator may be used in some embodiments, to reduce a peak value of a gradient to about 2/L. In the second stage, all weight parameters are calculated, so that a weight parameter calculation amount of the second stage is L (which is the number of layers of the model) times of that of the first stage.

It should be understood that, some embodiments are suitable for training a model including a plurality of layers having the same topology structure, so that some embodiments may be applied to models satisfying the standard, such as transformer and BERT.

In some embodiments, the first model may be considered as a pseudo model and may be obtained in the following manner: designating N1 layers of a to-be-trained model to share weight parameters in the to-be-trained model to convert the to-be-trained model into the first model. Then, the second model is obtained by designating the N1 layers not to share the weight parameters in the first model and copying a weight parameter of one obtained layer for N1 times as weight parameters of the N1 layers.

In some embodiments, the first model is constructed according to a to-be-trained model. For example, the first model is obtained by copying the to-be-trained model. However, after a copy operation is completed, N layers of the first model are designated to share weight parameters.

In some embodiments, step S01 and step S02 implement natural transition through a determination step. Specifically, after each round of training based on step S01 is finished, whether the error between the result and the expected result of the first model satisfies a set condition (for example, a decrease amplitude of the error is less than a set standard) is determined. If so, step S01 is ended and step S02 starts to be executed. Otherwise, a next round of training is performed based on step S01.

In some embodiments, N1 is determined according to the number of dedicated processing units integrated into the server on which model training is performed. For example, in the 12-layer network structure described above, each layer includes 1 trillion weight parameters, and if 4096 graphics processing units are integrated into the server for training, a half of weight parameters of each layer is determined as weight parameters shared among the layers according to the 4096 graphics processing units.

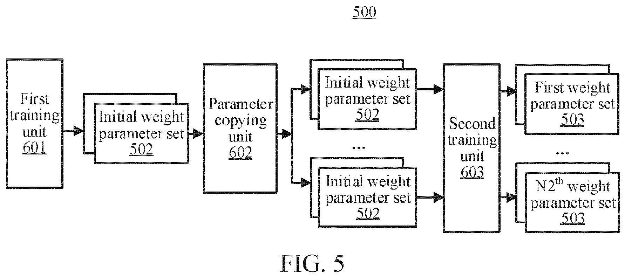

FIG. 5 is a schematic diagram of an apparatus for training a model according to some embodiments of the present disclosure. The apparatus 500 for training a model includes: a first training unit 601, a parameter copying unit 602, and a second training unit 603.

The first training unit 601 is configured to train a first model to obtain a parameter set of the trained first model, where N1 layers in the first model share the same weight parameters.

The parameter copying unit 602 is configured to copy the parameter set for a plurality of times as weight parameters of N2 layers of a second model.

The second training unit 603 is configured to train the second model to realize model convergence. The first model and the second model have the same computation graph, and the N1 and N2 layers have the same topology structure. For example, the N1 and N2 layers are the layer 301 shown in FIG. 3. N1 and N2 are greater than or equal to 2, and N2 is greater than or equal to N1.

According to some embodiments, the first training unit 601 outputs an initial weight parameter set 502 by training the first model, and the parameter copying unit 602 copies the initial weight parameter set 502 for N2 times as respectively independent weight parameters of the N2 layers of the second model. The second training unit 603 trains the second model (which uses the N2 initial weight parameter sets 502 as the weight parameters of the N2 layers) to obtain a first weight parameter set 503 to the N2th weight parameter set 503, so that a trained model that can be actually applied is obtained.

More specifically, with reference to FIG. 2, the scheduler 201 first executes deployment code to deploy the first model to a dedicated processing unit 202. After a round of training is completed, the dedicated processing unit 202 may calculate an error based on a result and an expected result of the model, calculate and correct weight parameters according to the error, and may further determine whether to perform a next round of training according to a decrease amplitude of errors of two adjacent rounds of training. If the decrease amplitude of errors of two adjacent rounds of training is less than a set threshold, training is no longer performed, and a training result is transmitted to the scheduler 201. The scheduler 201 copies the initial weight parameter set for N2 times as the weight parameters of the N2 layers of the second model and executes the deployment code to deploy a to-be-trained model to the dedicated processing unit 202. After a round of training is completed, the dedicated processing unit 202 may calculate an error based on a result and an expected result of the model, and calculate and correct the weight parameters according to the error until the first weight parameter set 503 to the N2th weight parameter set 503 satisfying the condition are obtained.

The apparatus for training a model in some embodiments corresponds to the method for training a model provided in some embodiments, and both can achieve the following technical effect of reducing at least one of a training time or a number of dedicated processing units integrated into a server when compared with the existing solution.

In some embodiments, the apparatus 500 for training a model further includes a first configuration unit configured to designate the N1 layers to share the weight parameters in the to-be-trained model to obtain the first model; and a second configuration unit configured to designate the N1 layers not to share the weight parameters in the first model to obtain the second model.

In some embodiments, the apparatus 500 for training a model further includes a determining unit configured to determine whether an error between a result and an expected result of the first model satisfies a set condition, and trigger to execute the parameter copying unit 602 if the set condition is satisfied.

Through the description of the foregoing embodiments, it is appreciated that the exemplary implementations described herein may be implemented by software or may be implemented by combining software with necessary hardware. Therefore, the technical solutions of the implementations of the present disclosure may be implemented in the form of a software product. The software product may be stored in a computer-readable medium including several instructions for instructing a computer device (which may be a personal computer, a server, a terminal device, or a network device) to perform the methods described in the implementations of the present disclosure.

The computer-readable medium may be a computer-readable signal medium or a computer-readable storage medium. The computer-readable storage medium may be, for example, but not limited to, an electric, magnetic, optical, electromagnetic, infrared, or semiconductive system, apparatus, or device, or any combination thereof. A more specific example of the computer-readable storage medium includes: an electrical connection having one or more wires, a portable computer magnetic disk, a hard disk, a random access memory (RAM), a read-only memory (ROM), an erasable programmable ROM (EPROM or flash memory), an optical fiber, a compact disk ROM (CD-ROM), an optical storage device, a magnetic storage device, or any appropriate combination thereof. In this application, the computer-readable storage medium may be any tangible medium containing or storing a program, and the program may be used by or used in combination with a processing unit, an apparatus, or a device.

The computer-readable signal medium may include a data signal being in a baseband or transmitted as a part of a carrier, which carries computer-readable program code. The propagated data signal may be in a plurality of forms, including, but not limited to, an electromagnetic signal, an optical signal, or any other appropriate combination thereof. The computer-readable signal medium may further be any computer-readable medium other than the computer-readable storage medium. The computer-readable medium may send, propagate, or transmit a program that is used by or used in conjunction with an instruction execution system, an apparatus, or a device.

The program code included in the computer-readable medium may be transmitted by using any suitable medium, including but not limited to, wireless transmission, a wire, a cable, radio frequency (RF) or the like, or any suitable combination thereof.

The computer program code used for executing the embodiments of the present disclosure may be written by using one or more programming languages or a combination thereof. The programming languages include an object-oriented programming language such as Java and C++, and may also include a conventional procedural programming language such as C. The program code may be completely executed on a user computer, partially executed on a user computer, executed as an independent software package, partially executed on a user computer and partially executed on a remote computer, or completely executed on a remote computer or server. For the case involving a remote computer, the remote computer may be connected to a computer of a user through any type of network including a local area network (LAN) or a wide area network (WAN), or may be connected to an external computer (for example, through the Internet by using an Internet service provider).

The embodiments may further be described using the following clauses:

1. A method for model training, comprising:

   training a first model to obtain a parameter set of the trained first model, wherein a plurality of first layers in the first model share same weight parameters;
   copying the parameter set for a plurality of times as weight parameters of a plurality of second layers of a second model; and
   training the second model to realize model convergence,
   wherein the first model and the second model have a same computation graph, and the number of the plurality of second layers is equal to or greater than the number of the plurality of first layers.

2. The method of clause 1, further comprising:

before training the first model, designating the plurality of first layers to share the weight parameters in a model to be trained to obtain the first model; and
before copying the parameter set for the plurality of times, designating the plurality of first layers not to share the weight parameters in the first model to obtain the second model.

3. The method of clause 1 or 2, further comprising:

after training the first model and before copying the parameter set for the plurality of times, determining whether an error between a result and an expected result of the first model satisfies a set condition; and
performing copying the parameter set for the plurality of times in response to the set condition being satisfied.

4. The method of any of clauses 1-3, wherein training the first model and training the second model are performed on a server comprising a central processing unit and a plurality of graphics processing units, and a CPU offload mode is adopted for training the second model.

5. The method of any of clauses 1-4, wherein the computation graph has a transformer or Bidirectional Encoder Representations from Transformers (BERT) structure.

6. An apparatus for model training, comprising:

a first training unit configured to train a first model to obtain a parameter set of the trained first model, wherein a plurality of first layers in the first model share same weight parameters;
a parameter copying unit configured to copy the parameter set for a plurality of times as weight parameters of a plurality of second layers of a second model; and
a second training unit configured to train the second model to realize model convergence,
wherein the first model and the second model have a same computation graph, and the number of the plurality of second layers is equal to or greater than the number of the plurality of first layers.

7. The apparatus of clause 6, further comprising:

a first configuration unit configured to designate the plurality of first layers to share the weight parameters in a model to-be-trained to obtain the first model; and
a second configuration unit configured to designate the plurality of first layers not to share the weight parameters in the first model to obtain the second model.

8. The apparatus of clause 6 or 7, wherein the computation graph has a transformer or Bidirectional Encoder Representations from Transformers (BERT) structure.

9. The apparatus of any of clauses 6-8, wherein the apparatus is configured to determine whether an error between a result and an expected result of the first model satisfies a set condition, and the parameter copying unit is configured to copy the parameter set for the plurality of times in response to the set condition being satisfied.

10. The apparatus of any of clauses 6-9, wherein the apparatus comprises a central processing unit and a plurality of graphics processing units, and the second training unit is configured to adopt a CPU offload mode to train the second model.

11. A server, comprising:

a memory storing a set of computer instructions,
one or more processors, and
a plurality of model acceleration units, wherein the one or more processors and the plurality of model acceleration units are configured to execute the set of instructions to cause the server to perform:

training a first model to obtain a parameter set of the trained first model, wherein a plurality of first layers in the first model share same weight parameters;
copying the parameter set for a plurality of times as weight parameters of a plurality of second layers of a second model; and
training the second model to realize model convergence,
wherein the first model and the second model have a same computation graph, and the number of the plurality of second layers is equal to or greater than the number of the plurality of first layers.

12. The server of clause 11, wherein the one or more processors and the plurality of model acceleration units are configured to execute the set of instructions to further cause the server to perform:

before training the first model, designating the plurality of first layers to share the weight parameters in a model to be trained to obtain the first model; and
before copying the parameter set for the plurality of times, designating the plurality of first layers not to share the weight parameters in the first model to obtain the second model.

13. The server of clause 11 or 12, wherein the one or more processors and the plurality of model acceleration units are configured to execute the set of instructions to further cause the server to perform:

after training the first model and before copying the parameter set for the plurality of times, determining whether an error between a result and an expected result of the first model satisfies a set condition; and
performing copying the parameter set for the plurality of times in response to the set condition being satisfied.

14. The server of any of clauses 11-13, wherein the one or more processors and the plurality of model acceleration units are configured to execute the set of instructions to further cause the server to adopt a CPU offload mode for training the second model.

15. The server of any of clauses 11-14, wherein the computation graph has a transformer or Bidirectional Encoder Representations from Transformers (BERT) structure.

16. A non-transitory computer-readable medium storing a set of instructions that is executable by at least one processor of an electronic device to cause the electronic device to perform a method for model training comprising:

training a first model to obtain a parameter set of the trained first model, wherein a plurality of first layers in the first model share same weight parameters;
copying the parameter set for a plurality of times as weight parameters of a plurality of second layers of a second model; and
training the second model to realize model convergence,
wherein the first model and the second model have a same computation graph, and the number of the plurality of second layers is equal to or greater than the number of the plurality of first layers.

17. The non-transitory computer-readable medium of clause 16, wherein the set of instructions is executable by the at least one processor of the electronic device to cause the electronic device to further perform:

before training the first model, designating the plurality of first layers to share the weight parameters in a model to be trained to obtain the first model; and
before copying the parameter set for the plurality of times, designating the plurality of first layers not to share the weight parameters in the first model to obtain the second model.

18. The non-transitory computer-readable medium of clause 16 or 17, wherein the set of instructions is executable by the at least one processor of the electronic device to cause the electronic device to further perform:

after training the first model and before copying the parameter set for the plurality of times, determining whether an error between a result and an expected result of the first model satisfies a set condition; and
performing copying the parameter set for the plurality of times in response to the set condition being satisfied.

19. The non-transitory computer-readable medium of any of clauses 16-18, wherein training the first model and training the second model are performed on a server comprising a central processing unit and a plurality of graphics processing units, and a CPU offload mode is adopted for training the second model.

20. The non-transitory computer-readable medium of any of clauses 16-19, wherein the computation graph has a transformer or Bidirectional Encoder Representations from Transformers (BERT) structure.

The foregoing descriptions are merely exemplary embodiments of the present disclosure, but are not intended to limit the present disclosure. For a person skilled in the art, various modifications and variations can be made on the present disclosure. Any modification, equivalent replacement, or improvement made within the spirit and principle of the present disclosure shall fall within the protection scope of the present disclosure.

**Claims**

1. A computer-implemented method for model training, comprising:

   training a first model to obtain a parameter set of the trained first model, wherein a plurality of first layers in the first model share same weight parameters;
   copying the parameter set for a plurality of times as weight parameters of a plurality of second layers of a second model; and
   training the second model to realize model convergence,
   wherein the first model and the second model have a same computation graph, and the number of the plurality of second layers is equal to or greater than the number of the plurality of first layers.

2. The method of claim 1, comprising:

   before training the first model, designating the plurality of first layers to share the weight parameters in a model to be trained to obtain the first model; and
   before copying the parameter set for the plurality of times, designating the plurality of first layers not to share the weight parameters in the first model to obtain the second model.

3. The method of claim 1 or 2, comprising:

   after training the first model and before copying the parameter set for the plurality of times, determining whether an error between a result and an expected result of the first model satisfies a set condition; and
   copying the parameter set for the plurality of times in response to the set condition being satisfied.

4. The method of any of claims 1 to 3, wherein training the first model and training the second model are performed on a server comprising a central processing unit, CPU, and a plurality of graphics processing units, and a CPU offload mode is adopted for training the second model.

5. The method of any of claims 1 to 4, wherein the computation graph has a transformer or Bidirectional Encoder Representations from Transformers, BERT, structure.

6. A computer-readable storage medium storing instructions which, when executed by at least one processor of an electronic device, cause the electronic device to perform the method of any of claims 1 to 5.

7. A server, comprising:

   one or more processors; and
   a plurality of model acceleration units, wherein the one or more processors and the plurality of model acceleration units are configured to execute a set of instructions to cause the server to perform the method of any of claims 1 to 5.

8. The server of claim 7, wherein the one or more processors comprise a central processing unit, CPU, and a plurality of graphics processing units, and wherein and one or more processors and the plurality of model acceleration units are configured to execute the set of instructions to cause the server to adopt a CPU offload mode for training the second model.

9. An apparatus for model training, comprising:

   a first training unit configured to train a first model to obtain a parameter set of the trained first model, wherein a plurality of first layers in the first model share same weight parameters;
   a parameter copying unit configured to copy the parameter set for a plurality of times as weight parameters of a plurality of second layers of a second model; and
   a second training unit configured to train the second model to realize model convergence,
   wherein the first model and the second model have a same computation graph, and the number of the plurality of second layers is equal to or greater than the number of the plurality of first layers.

10. The apparatus of claim 9, comprising:

a first configuration unit configured to designate the plurality of first layers to share the weight parameters in a model to-be-trained to obtain the first model; and
a second configuration unit configured to designate the plurality of first layers not to share the weight parameters in the first model to obtain the second model.

11. The apparatus of claim 9 or 10, wherein the computation graph has a transformer or Bidirectional Encoder Representations from Transformers, BERT, structure.

12. The apparatus of any of claims 9 to 11, wherein the apparatus is configured to determine whether an error between a result and an expected result of the first model satisfies a set condition, and the parameter copying unit is configured to copy the parameter set for the plurality of times in response to the set condition being satisfied.

13. The apparatus of any of claims 9 to 12, comprising a central processing unit, CPU, and a plurality of graphics processing units, wherein the second training unit is configured to adopt a CPU offload mode to train the second model.

100

103

102

Network
101

FIG. 1

Server 200

| I/O interface 204 | Scheduler 201 | Storage unit 203 |
|---|---|---|

205

| Dedicated processing unit 202 | Dedicated processing unit 202 | ... | Dedicated processing unit 202 | Dedicated processing unit 202 |
|---|---|---|---|---|

FIG. 2

Output layer 303

301

Summation and normalization layer 3014

Feedforward neural network layer 3013

Summation and normalization layer 3012

Multi-head self-attention layer 3011

N*

Output layer 302

FIG. 3

Train a first model to obtain a parameter set of the trained first model — S01

Copy the parameter set of the trained first model for a plurality of times as weight parameters of a plurality of second layers of a second model — S02

Train the second model to realize model convergence — S03

FIG. 4

500

```
┌──────────┐      ┌──────────────┐   ┌──────────┐      ┌──────────────┐   ┌──────────┐      ┌──────────────┐
│  First   │      │ Initial weight│   │ Parameter│      │ Initial weight│   │  Second  │      │ First weight │
│ training │─────▶│ parameter set │──▶│ copying  │─────▶│ parameter set │──▶│ training │─────▶│ parameter set│
│   unit   │      │     502       │   │   unit   │      │     502       │   │   unit   │      │     503      │
│   601    │      │               │   │   602    │      │               │   │   603    │      │              │
└──────────┘      └──────────────┘   └──────────┘      └──────────────┘   └──────────┘      └──────────────┘
```

First training unit 601

Initial weight parameter set 502

Parameter copying unit 602

Initial weight parameter set 502

...

Initial weight parameter set 502

Second training unit 603

First weight parameter set 503

...

N2<sup>th</sup> weight parameter set 503

FIG. 5

Europäisches
Patentamt
European
Patent Office
Office européen
des brevets

## EUROPEAN SEARCH REPORT

**Application Number**

EP 22 20 4943

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JUNYANG LIN ET AL: "M6-10T: A Sharing-Delinking Paradigm for Efficient Multi-Trillion Parameter Pretraining", ARXIV.ORG, CORNELL UNIVERSITY LIBRARY, 201 OLIN LIBRARY CORNELL UNIVERSITY ITHACA, NY 14853, 8 October 2021 (2021-10-08), pages 1-14, XP091072420, * page 1 - page 10; figure 3; table 1 * ----- | 1-13 | INV. G06N3/084 G06N3/09 G06N3/096 G06N3/098 G06N3/045 |

**TECHNICAL FIELDS SEARCHED (IPC)**

G06N

The present search report has been drawn up for all claims

| Place of search | Date of completion of the search | Examiner |
|---|---|---|
| The Hague | 10 March 2023 | Theissing, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)